# EUROPÄISCHE PATENTSCHRIFT

(11) **EP 0 980 783 B1**
(45) Veröffentlichungstag und Bekanntmachung des Hinweises auf die Patenterteilung: **11.02.2004**
(21) Anmeldenummer: 99112301.9
(22) Anmeldetag: 26.06.1999
(51) Int. Cl.: B60N 2/02

(54) **Sitzversteller**
Seat adjuster
Dispositif de réglage de siège

(30) Priorität: 18.08.1998 DE 19837344
(43) Veröffentlichungstag der Anmeldung: 23.02.2000
(73) Patentinhaber: ISE Innomotive Systems Europe GmbH, 51702 Bergneustadt (DE)
(72) Erfinder: Janisch, Mirko, 53721 Siegburg (DE); Thiekötter, Uwe, 51702 Bergneustadt (DE); Dörre, Wolfgang, 51647 Gummersbach (DE)
(74) Vertreter: Fuchs Mehler Weiss & Fritzsche

(56) Entgegenhaltungen:
- DE-A- 2 846 632
- DE-A- 2 930 095
- DE-A- 3 503 897
- DE-A- 3 933 163
- DE-A- 19 700 629
- GB-A- 2 021 188

## Beschreibung

Die Erfindung bezieht sich auf einen motorisch verstellbaren Sitz für Kraftfahrzeuge mit gegenüber parallelen, fahrzeugfest angeordneten Führungsschienen längsverschiebbaren Befestigungsschienen, zwischen denen sich zwei durch einen Elektromotor über Getriebe antreibbare, parallel zueinander angeordnete Verstellspindeln erstrecken, die mit Verstellmuttern zusammenwirken, die mit den Führungsschienen verbunden sind, und mit einem weiteren Elektromotor mit Getriebe, Verstellspindel und Verstellmutter für eine Sitzhöhenverstellung, wobei zwischen Getriebe und Verstellmutter auf mindestens einer Verstellspindel, diese umgreifend, ein elastisches Dämpfungselement in Verbindung mit einem Endanschlag zur Begrenzung der Verstellbewegung angeordnet ist, (S. zum Beispiel DE 35 03 897 C2).

Im Zuge der Entwicklung im Automobilbau, bestimmte Vorgänge bei der Bedienung des PKW's zu elektrifizieren, ist es auch bekannt geworden, die Verstellung von Kraftfahrzeugsitzen, sowohl hinsichtlich einer horizontalen Verstellung als auch hinsichtlich einer Höhenverstellung durch Knopfdruck elektrisch betätigbar durchzuführen.

Zu diesem Zweck sind Elektromotoren in Verbindung mit Winkelgetrieben, Verstellspindeln und Verstellmuttern vorgesehen, wobei typischerweise die Verstellmuttern ortsfest mit dem Fahrzeug verbunden sind und die Motoren mit Winkelgetriebe und Verstellspindel an dem zu bewegenden Fahrzeugsitz angebracht sind. Werden die Elektromotoren durch Knopfdruck mit der Bordspannung beaufschlagt, verdrehen sich die Verstellspindeln gegenüber der Verstellmutter und verstellen damit den Sitz in die jeweilige Richtung. Fest angebrachte Endanschläge begrenzen dabei den Verstellweg.

Ein derartiger motorisch verstellbarer Sitz für Kraftfahrzeuge ist beispielsweise durch die o.g. DE 35 03 897 C 2 und die DE 35 08 515 A 1 bekannt geworden.

Beim Verstellen des Sitzes bewegen sich jedoch die Muttern infolge von Fertigungstoleranzen nicht vollständig gleichförmig. Es erfolgt daher beim Erreichen der Endposition ein harter Stoß auf den zugehörigen Endanschlag mit einer sich anschließenden ruckartigen Beschwenkbewegung des Sitzes, um eine lotrechte Achse (Hochachse) im Fall der Horizontalverstellung. Ein derartiger Stoß in Verbindung mit einer ruckartigen Schwenkbewegung wird erfahrungsgemäß vom Benutzer des Sitzes als außerordentlich störend empfunden. Außerdem können bei dem relativ harten Anschlag der Verstellmutter am Getriebe in der einen Verstellrichtung oder am festen Endanschlag in der anderen Richtung die Zähne des Getriebes ausbrechen, die heute typischerweise aus Kunststoff bestehen, wodurch unter Verärgerung des PKW-Besitzers eine Reparatur notwendig ist.

Es ist daher durch die vorgenannten Schriften bekannt geworden, zur Vermeidung dieser harten Stöße federnde Dämpfungselemente, insbesondere Puffer, aus einem gummielastischen Werkstoff, z.B. einem elastomeren Kunststoff oder mit einem gummielastischen Werkstoff umkleidete Tellerfedern, gasgefüllte Hohlkörper oder Balgen vorzusehen, die zwischen Getriebe und Verstellmutter auf die Verstellspindel aufgeschoben sind. Diese Dämpfungselemente treten in Funktion, kurz bevor der feste Endanschlag erreicht ist. Kurz vor dem Auflaufen wird nämlich die Fahrgeschwindigkeit durch das elastische Dämpfungselement derart gebremst, daß der Stoß auf den metallischen Endanschlag nicht als zu hart empfunden wird und zudem keine Getriebeschäden verursacht.

Die DE 28 46 632 zeigt dabei auch eine entsprechende elastische Dämpfung in Form von elastischen Anlaufringen bei einer Höhenverstellung von Kraftfahrzeugsitzen.

Motorische Sitzverstellungen der vorgenannten Art benötigen eine definierte Begrenzung der Verstellbewegung bei der Aus-Einfahrbewegung der Verstellspindel. Da die gemäß dem Stand der Technik verwendeten Dämpfungselemente, die aus einem gummielastischen Material bestehen, sich beim Auftreffen der Verstellmutter auf den Getriebeflansch verformen, können sie keinen definierten Gegenanschlag vorgeben. Es ist daher stets ein metallischer Anschlag fest angebracht, der einen konstanten Abstand zu der Verstellmutter hat.

Diese bekannte Konstruktion beansprucht nicht zuletzt wegen der notwendigen langgestreckten Verstellmutter, einen großen Bauraum im Sitzgestell und ist aufwendig. Da der metallische Anschlag einen festen Abstand zu der Verstellmutter hat, ist der mögliche Verstellweg nicht zerstörungsfrei änderbar.

Der Erfindung liegt die Aufgabe zugrunde, die Begrenzung der Verstellwege bei dem eingangs bezeichneten Sitzversteller auf einfachere und wirtschaftlichere Weise konstruktiv durchzuführen mit einer einfachen Möglichkeit zur Variation des Verstellweges.

Die Lösung dieser Aufgabe gelingt gemäß der Erfindung dadurch, daß das Dämpfungselement aus einem harten Kunststoff-Thermoplastmaterial besteht, mit einer definierten Anschlagfläche als Endanschlag in Kombination mit einem elastischen Teil zur Dämpfung der Verstellbewegung vor dem Auftreffen auf den Endanschlag.

Bei dem erfindungsgemäßen Dämpfungselement handelt es sich daher um ein kombiniertes Dämpfungselement, welches beides beinhaltet, sowohl einen elastischen Teil als auch durch die Materialwahl und die stirnseitige Konturgebung einen Endanschlag. Die werkstoffspezifische Eigenschaft und die geometrische Ausführungsform sind daher so aufeinander abgestimmt, daß Dämpfung und Endanschlag zusammen in einem Bauteil vereint sind. Ein zusätzlicher metallischer Endanschlag wie im bekannten Fall ist daher funktionell nicht mehr notwendig.

Durch die erfindungsgemäße Ausbildung können nunmehr auch kurze Verstellmuttern mit sehr kompakter Bauart eingesetzt werden, weil mechanisch nicht mehr auf einen mit ihr in Verbindung stehenden metallischen Anschlag Rücksicht genommen werden muß.

Der maximal bzw. minimal mögliche Verstellweg kann durch kurze oder lange Ausführungen der Dämpfungselemente auf einfache Weise vorgegeben werden. Dadurch kann eine Feinabstimmung der Fahrwege erfolgen, um z.B. aufgebaute einseitige Toleranzen auszugleichen.

Der fertigungstechnische und wirtschaftliche Aufwand ist geringer als im bekannten Fall, weil weniger Teile anfallen und Schweißvorgänge für die Anbringung von metallischen Endanschlägen entfallen.

Gemäß einer Weiterbildung der Erfindung ist das Kunststoff-Thermoplastmaterial ein technischer Kunststoff aus der Rohstoffgruppe Polyacetal und ist vorzugsweise ein Acetalhomopolymerisat (POM-H). Es hat sich in Versuchen gezeigt, daß dieses Kunststoff-Thermoplastmaterial sich in ganz besonderer Weise dafür eignet, sowohl den elastischen Teil zur Dämpfung der Verstellbewegung zu liefern als auch eine definierte Anschlagfläche als Endanschlag vorzugeben.

Für die Ausbildung des Dämpfungselementes stehen dem Fachmann eine Reihe von Möglichkeiten zur Verfügung. Eine besonders wirksame Dämpfungs- und Anschlagsfunktion läßt sich erzielen, wenn das Dämpfungselement ringförmig mit einer zentrischen Ausnehmung ausgebildet ist, mit einem zylindrischen Abschnitt und einem kegelstumpfförmig auslaufenden vorderen Abschnitt, dessen Frontfläche den Endanschlag bildet.

Eine besonders ausgeprägte Dämpfung über das elastische Verhalten des Materials hinaus läßt sich gemäß einer Ausgestaltung der Erfindung erzielen, wenn an der Ausnehmung im Frontflächenbereich über die Frontflächenebene vorstehende Dämpfungs-Lippen ausgeformt sind.

Alternativ dazu oder in Kombination damit können in dem Dämpfungselement, vorzugsweise in dem vorderen Abschnitt, kompressible Dämpfungskammern oder Dehnungsfugen ausgebildet sein.

Um einen sicheren Anschlag der Verstellmutter an dem Getriebe zu erzielen, ist das dazwischenliegende Dämpfungselement nicht einfach auf die Verstellspindel aufgesteckt, sondern es ist gemäß einer Ausgestaltung der Erfindung vorzugsweise an dem Getriebe ein zylindrischer Abschnitt zum Aufstecken des Dämpfungselementes vorgesehen. Dabei hat es sich als zweckmäßig erwiesen, daß im zylindrischen Abschnitt des Dämpfungselementes Aufsteckrippen ausgeformt sind, die ein sicheres Aufstecken des Dämpfungselementes gewährleisten.

Weitere Ausgestaltungen und Vorteile der Erfindung ergeben sich anhand der Beschreibung von in den Zeichnungen dargestellten Ausführungsbeispielen.

Es zeigen:
- Fig. 1: einen verstellbaren Träger für einen Kraftfahrzeugsitz in der Draufsicht,
- Fig. 2: einen Längsschnitt durch das erfindungsgemäße Dämpfungselement mit einer Draufsicht auf den anschlagseitigen Frontbereich im Figurenteil A und mit einer Querschnittsansicht im abgewandten zylindrischen Abschnitt im Figurenteil B,
- Fig. 3: ein Kraftwegdiagramm zur Veranschaulichung des elastischen Verhaltens des erfindungsgemäßen Dämpfungsgliedes, und
- Fig. 4: in einer vergrößerten Darstellung einen Ausschnitt aus der Fig. 1, die den Motor samt dem zugehörigen Winkelgetriebe und der Verstellspindel mit einem Aufsteckfortsatz für das erfindungsgemäße Dämpfungselement an der Abtriebsseite des Winkelgetriebes zeigt.

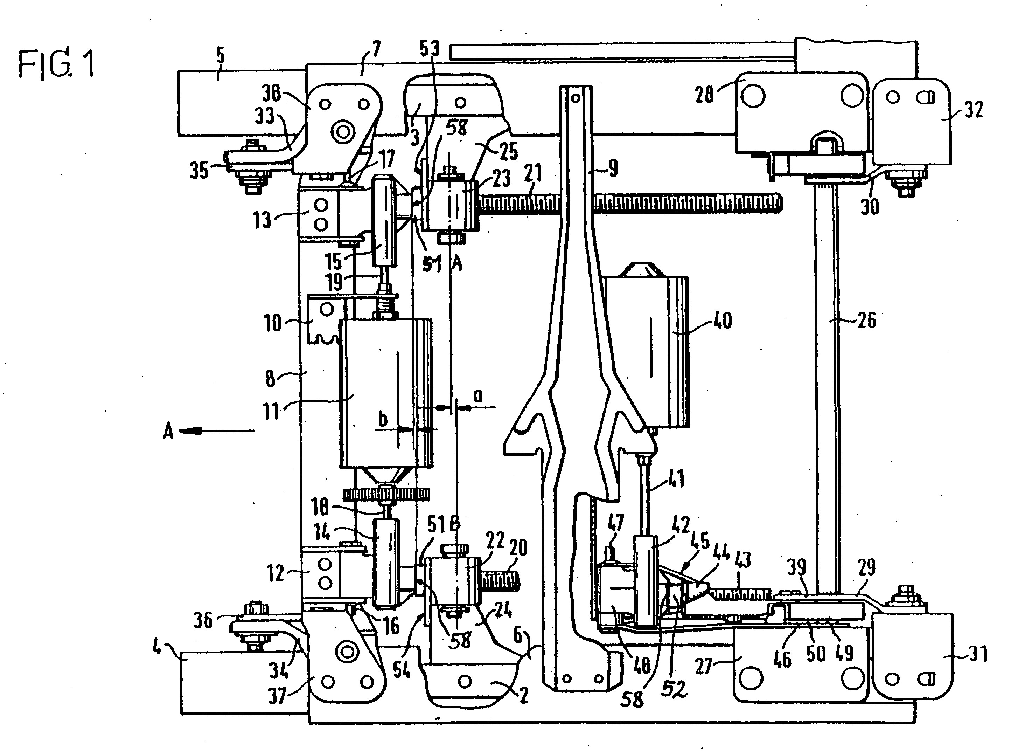

Bei dem in Fig. 1 gezeigten verstellbaren Träger für einen Kraftfahrzeugsitz ist in zwei Parallelen, am Fahrzeug befestigten Führungsschienen 2, 3 jeweils ein Schienenunterteil 4, 5 einer darauf befestigten Befestigungsschiene 6, 7 längsbeweglich geführt. Die beiden Befestigungsschienen 6, 7 sind durch eine vordere Traverse 8 und eine hintere Traverse 9 miteinander verbunden. An der vorderen Traverse 8 ist in einem mittleren Bereich ein Motorhalter 10 für einen Antriebsmotor 11 vorgesehen. Auf beiden Seiten des Motorhalters 10 ist jeweils ein Lagerbock 12 bzw. 13 angeordnet, der jeweils ein Winkelgetriebe 14, 15 trägt. Diese Winkelgetriebe sind um in den Lagerböcken 12, 13 im wesentlichen horizontal angeordnete Lagerbolzen 16, 17 schwenkbar. Die Winkelgetriebe 14, 15 werden vom Antriebsmotor 11 über Antriebswellen 18, 19 angetrieben. Sie treiben ihrerseits Verstellspindeln 20, 21 an, auf denen Verstellmuttern 22, 23 und die erfindungsgemäß ausgebildeten, in der Fig. 1 nur schematisch dargestellten Anschlagelemente 51 A und 51 B gelagert sind.

Die Verstellmuttern 22, 23 sind über Mutterhalter 24, 25 ortsfest mit dem Fahrzeug verbunden.

Im hinteren Bereich des Trägers ist eine parallel zu den Traversen 8, 9 verlaufende Verstellwelle 26 vorgesehen, die in den mit den Befestigungsschienen 6, 7 verbundenen Lagerböcken 27, 28 drehbar gelagert ist. Die Verstellwelle 26 weist einen quadratischen Querschnitt auf und trägt zwei neben den Lagerböcken 27, 28 angeordnete Schwenkarme 29, 30, die mit der Verstellwelle 26 verschweißt sind. An den Enden der Schwenkarme 29, 30 sind hintere Trägerplatten 31, 32 angelenkt, die zur Befestigung des (hier nicht dargestellten) Oberteils des Fahrzeugsitzes dienen. Entsprechend sind an der vorderen Traverse 8 an fest mit dieser verbundenen Trägerarmen 33, 34 Schwenkarme 35, 36 angelenkt, die vordere Trägerplatten 37, 38 zur Befestigung des Oberteils des Fahrzeugsitzes aufweisen.

Ein Antriebshebel 39, der mit dem Schwenkarm 29 einstückig ausgebildet sein kann, ist gleichfalls auf der Verstellwelle 26 fest angeordnet. Die hintere Traverse 9 trägt in ihrem mittleren Abschnitt einen weiteren Antriebsmotor 40 für die Höhenverstellung. Dieser Antriebsmotor 40 ist über eine Antriebswelle 41 mit einem Winkelgetriebe 42 verbunden, welches über eine Verstellspindel 43 eine Verstellmutter 44 hin- und herbewegt. Zur Übertragung der Verstellbewegung der Verstellmutter 44 ist der Antriebshebel 39 ah der Verstellmutter 44 angelenkt.

Das Winkelgetriebe 42 ist an der Verstellwelle 26 mittels eines Trägerelementes 45 aufgehängt. Das Trägerelement weist einen Aufhängeteil 46 auf, der an der Verstellwelle 26 drehbar gelagert ist und einen Getriebehalteteil 48, der mittels eines Lagerbolzens 47 das Winkelgetriebe um eine horizontale Achse schwenkbar lagert. Der Aufhängeteil 46 und der Getriebehalteteil 48 des Trägerelementes sind hier einstückig ausgebildet, wobei der Getriebehalteteil 48 im Querschnitt U-förmig ausgeformt ist und der Aufhängeteil 46 als Fortsatz einer die U-Form begrenzenden Seitenwand ausgeführt ist. Zweckmäßig besteht das Trägerelement 45 aus Blech.

Zwischen dem Antriebshebel 39 und dem Trägerelement 45 ist eine Hilfsfeder 49 angeordnet, die zweckmäßig einen Schenkel 50 aufweist, der am Trägerelement 45 angreift. Ferner umgreift die Hilfsfeder 49, die hier als Spiralfeder nur angedeutet ist, die Verstellwelle 26, die im Bereich der Lagerung im Querschnitt und rund im Querschnitt und ansonsten eckig, insbesondere viereckig, ausgeführt ist.

Auch bei dieser Höhenverstellung ist zwischen der Verstellmutter 44 und dem Winkelgetriebe 42 ein erfindungsgemäß ausgebildetes Dämpfungselement 52 angeordnet.

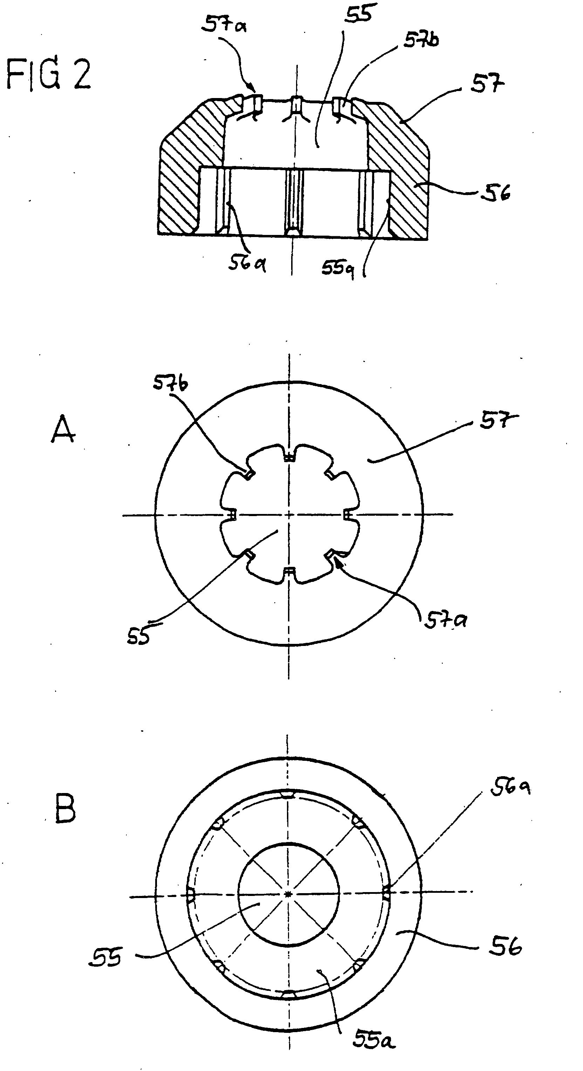

Die Fig. 2 mit den weiteren Figurenteilen A und B zeigt eine besonders vorteilhafte Ausführungsform der erfindungsgemäß ausgebildeten Dämpfungselemente 51 A, 51 B und 52. Dieses Dämpfungselement ist ringförmig mit einer zentrischen Ausnehmung 55 ausgebildet, mit einem zylindrischen Abschnitt 56 und einem kegelstumpfförmig auslaufenden vorderen Abschnitt 57, dessen Frontfläche 57 a den Endanschlag bildet. An der Ausnehmung 55 sind im Frontflächenbereich über die Frontflächenebene vorstehende Dämpfungslippen 57 b ausgeformt. Diese Dämpfungslippen stehen ca. 0,5 bis 0,8 mm über die Frontflächenebene vor und sind elastisch nachgebend ausgebildet.

Anstelle dieser Dämpfungslippen 57 b können in dem Dämpfungselement auch kompressible Dämpfungskammern oder Dehnungsfugen ausgebildet sein, die im einzelnen in der Fig. 2 nicht dargestellt sind. Diese Kammern bzw. Fugen können auch ergänzend zu Dämpfungslippen vorgesehen sein.

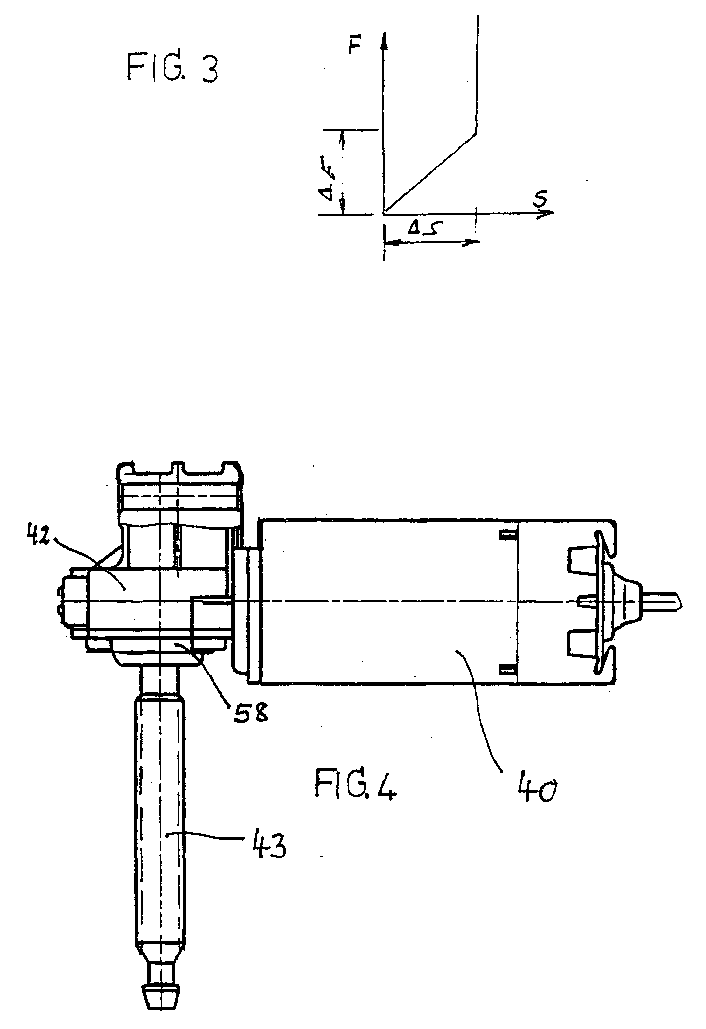

Im zylindrischen Abschnitt 56 des Dämpfungselementes hat die Ausnehmung 55 einen größeren Durchmesser als im Frontbereich und ist mit 55 a bezeichnet. In diesem Bereich sind Rippen 56 a ausgeformt, die zum sicheren Aufstecken des Dämpfungselementes auf einen zylindrischen Abschnitt 58 des Getriebes dienen, wie anhand def Fig. 4 hinsichtlich des von dem Motor 40 angetriebenen Getriebes 42 mit der Verstellspindel 43 für die Höherverstellung gezeigt ist. Das Dämpfungsglied nach Fig. 2 ist dadurch lösbar auf dem Getriebe aufgesteckt und zeigt mit der Anschlagfläche 57 a von dem Getriebe weg in Richtung der Verstellmutter, die in Fig. 4 nicht dargestellt ist, jedoch aus Fig. 1 ersichtlich ist. Um einen definierten Endanschlag zu gewährleisten, ist an den Verstellmuttern jeweils eine glatte Anlagefläche ausgebildet, und zwar gemäß Fig. 1 für die Verstellmutter 22 die Anlagefläche 54, für die Verstellmutter 23 die Anlagefläche 53 und für die höhenverstellende Verstellmutter 44 die Anlagefläche 44 a. Diese Anlageflächen wirken mit der Anlagefläche 57 a des Dämpfungselementes nach Fig. 2 im Sinne eines definierten Gegenanschlages zusammen.

Wenn der Sitz in Pfeilrichtung A (in Längsrichtung) verstellt werden soll, dann werden die Verstellspindeln 22, 21 vom Antriebsmotor 11 über die Antriebswellen 18, 19 und die Winkelgetriebe 14, 15 in Drehung versetzt, so daß diese sich aus den Verstellmuttern 22, 23 herausdrehen und die Traversen 8, 9 mit den daran befestigten Teilen gegenüber den Führungsschienen 2, 3 verschieben. Da infolge von Fertigungstoleranzen oftmals ein Versatz a der beiden Verstellmuttern 22, 23 zueinander vorhanden ist, berühren die Anschlagflächen 53, 54 beim Verstellen des Sitzes in seine eine (in der Abbildung dargestellte) Endposition die Anschlagelemente 51 A und 51 B nacheinander. Beim Auftreffen der glatten Flächen 53 und 54 auf die vorstehenden Zungen 57 b des Dämpfungselementes nach Fig. 2 werden diese zunächst elastisch nachgebend nach innen gedrückt und legen dabei den Weg Δs zurück, wodurch sich, wie in Fig. 3 dargestellt, die Kraft linear oder progressiv erhöht. Sobald die Zungen 57 b bündig nach innen gedrückt sind, tritt die Anschlagfläche 57 a in Funktion, d. h. da dann das Dämpfungselement praktisch nicht mehr kompressibel ist, steigt die Kraft F nach dem Abschnitt ΔF extrem an.

Um dieses Verhalten zu gewährleisten, besteht das Dämpfungselement nach Fig. 2 aus einem Kunststoff-Thermoplastmaterial, vorzugsweise aus einem Kunststoff aus der Rohstoffgruppe Polyacetal. Vorzugsweise ist der Kunststoff dabei ein Acetalhomopolymerisat (POM-H). Dieser Kunststoff hat einen Elastizitätsmodul von 3300 MPa, gemessen im Zugversuch gemäß DIN 53457 und eine Kugeldruckhärte von 170 MPa und hat sich in Versuchen als das beste Material für die Ausformung der erfindungsgemäßen Dämpfungselemente erwiesen.

Infolge der Elastizität der Anschlagelemente sind diese in der Lage, die Folgen von Fertigungstoleranzen oder von Abnutzungserscheinungen zu eliminieren bzw. sie soweit auszugleichen, daß sie für den Benutzer nicht mehr spürbar sind. Anstelle eines Versatzes der beiden Anschlagflächen 53, 54 zueinander (siehe Fig. 1) kann auch ein Versatz b zwischen den Anlageflächen der Winkelgetriebe 14, 15, 42 im Bereich des zylindrischen Abschnittes 58 auftreten. Die ringförmigen Anschlagelemente 51 A, 51 B sind jedoch aufgrund ihres elastischen Abschnittes in der Lage, einen Verlust am Komfort zu vermeiden, indem sie den Versatz a und/oder b ausgleichen und zudem den Anschlag soweit abdämpfen, daß die Kunststoff-Getriebeteile der Winkelgetriebe nicht beschädigt werden.

In gleicher Weise wird beim Auftreffen der Anschlagfläche 44 a der Verstellmutter 44 auf das Dämpfungselement 52 der Anschlag weich abgefangen unter Vorgabe einer definierten Begrenzung der Höhenverstellung.

## Patentansprüche

1. Motorisch verstellbarer Sitz für Kraftfahrzeuge, mit gegenüber parallelen, fahrzeugfest angeordneten Führungsschienen (2, 3) längsverschiebbaren Befestigungsschienen (6, 7), zwischen denen sich zwei durch einen Elektromotor (11) über Getriebe (14, 15) antreibbare, parallel zueinander angeordnete Verstellspindeln (20, 21) erstrecken, die mit Verstellmuttern (22, 23) zusammenwirken, die mit den Führungsschienen verbunden sind, und mit einem weiteren Elektromotor (40) mit Getriebe (42), Verstellspindel (43) und Verstellmutter (44) für eine Sitzhöhenverstellung, wobei zwischen Getriebe und Verstellmutter auf mindestens einer Verstellspindel, diese umgreifend, ein elastisches Dämpfungselement (51, 52) in Verbindung mit einem Endanschlag zur Begrenzung der Verstellbewegung angeordnet ist, **dadurch gekennzeichnet, daß** das Dämpfungselement (51, 52) aus einem harten Kunststoff-Thermoplastmaterial besteht, mit einer definierten Anschlagfläche (57 a) als Endanschlag in Kombination mit einem elastischen Teil (57 b) zur Dämpfung der Verstellbewegung vor dem Auftreffen auf den Endanschlag.

2. Sitz nach Anspruch 1, **dadurch gekennzeichnet, daß** das Kunststoff-Thermoplastmaterial ein technischer Kunststoff aus der Rohstoffgruppe Polyacetal ist.

3. Sitz nach Anspruch 2, **dadurch gekennzeichnet, daß** der Kunststoff ein Acetalhomopolymerisat (POM-H) ist.

4. Sitz nach einem der Ansprüche 1 bis 3, **dadurch gekennzeichnet, daß** das Dämpfungselement (51, 52) ringförmig mit einer zentrischen Ausnehmung (55) ausgebildet ist, mit einem zylindrischen Abschnitt (56) und einem kegelstumpfförmig auslaufenden vorderen Abschnitt (57), dessen Frontfläche (57 a) den Endanschlag bildet.

5. Sitz nach Anspruch 4, **dadurch gekennzeichnet, daß** an der Ausnehmung (55) im Frontflächenbereich über die Frontflächenebene vorstehende Dämpfungs-Lippen (57 b) ausgeformt sind.

6. Sitz nach Anspruch 4 oder 5, **dadurch gekennzeichnet, daß** in dem Dämpfungselement (51, 52) kompressible Dämpfungskammern oder Dehnungsfugen ausgebildet sind.

7. Sitz nach einem der Ansprüche 4 bis 6, **dadurch gekennzeichnet, daß** an dem Getriebe (14, 15, 42) ein zylindrischer Abschnitt (55) zum Aufstecken des Dämpfungselementes (51, 52) vorgesehen ist.

8. Sitz nach Anspruch 7, **dadurch gekennzeichnet, daß** im zylindrischen Abschnitt (56) des Dämpfungselementes (51, 52) Aufsteckrippen (56 a) ausgeformt sind.

## Claims

1. Electromotively adjustable seat for motor vehicles, comprising fixing rails (6, 7) adapted to be displaced lengthwise in relation to parallel guide rails (2, 3) disposed rigidly on the vehicle, and extending between said fixing rails (6, 7) there being two mutually parallel adjusting spindles (20, 21) adapted to be driven by an electric motor (11) via gearboxes (14, 15) , said adjusting spindles (20, 21) cooperating with adjusting nuts (22, 23) which are connected to the guide rails, and comprising a further electric motor (40) with a gearbox (42), adjusting spindle (43) and adjusting nut (44) for adjusting the seat height, there being disposed between the gearbox and the adjusting nut, on at least one adjusting spindle and so as to engage around the latter, a flexible damping element (51, 52) in conjunction with a limit stop for restricting the adjusting movement, **characterised in that** the damping element (51, 52) is made from a rigid thermoplastic, with a defined contact surface (57a) to act as a limit stop in combination with a flexible part (57b) for damping the adjusting movement before the limit stop is encountered.

2. Seat according to claim 1, **characterised in that** the thermoplastic is an engineering plastic taken from the polyacetal group of raw materials.

3. Seat according to claim 2, **characterised in that** the plastic is an acetal homopolymer (POM-H).

4. Seat according to any of claims 1 to 3, **characterised in that** the damping element (51, 52) has an annular configuration with a central recess (55), featuring a cylindrical portion (56) and a frustoconically shaped front portion (57) whose front surface (57a) forms the limit stop.

5. Seat according to claim 4, **characterised in that** fashioned on the recess (55), in the region of the front surface, are damping lips (57b) which project beyond the plane of the front surface.

6. Seat according to claim 4 or 5, **characterised in that** formed in the damping element (51, 52) are compressible damping compartments or expansion joints.

7. Seat according to any of claims 4 to 6, **characterised in that** provided on the gearbox (14, 15, 42) is a cylindrical portion (55) on which to push the damping element (51, 52).

8. Seat according to claim 7, **characterised in that** fashioned in the cylindrical portion (56) of the damping element (51, 52) are push-on fins (56a).

## Revendications

1. Siège de véhicule automobile réglable de façon motorisée, comprenant des rails de fixation (6, 7) pouvant se déplacer longitudinalement face à des rails de guidage (2, 3) parallèles et disposés de manière accolés au véhicule, rails de fixation entre lesquels s'étendent deux tiges de réglage (20, 21) pouvant être entraînées grâce à un électromoteur (11) par l'intermédiaire d'une transmission (14, 15), et parallèles l'une à l'autre, lesquelles tiges coopèrent avec des écrous de réglage (22, 23), qui sont reliés aux rails de guidage, et comprenant un autre électromoteur (40) présentant une transmission (42), une tige de réglage (43) et un écrou de réglage (44) pour le réglage en hauteur d'un siège, un élément d'amortissement (51, 52) élastique relié à une butée de fin de course destinée à limiter le déplacement de réglage étant disposé entre la transmission et l'écrou de réglage, sur au moins une tige de réglage, enveloppant ceux-ci, **caractérisé en ce que** l'élément d'amortissement (51, 52) se compose d'une matière thermoplastique dure, comprenant une surface de butée (57a) définie comme une butée de fin de course en combinaison avec une pièce (57b) élastique destinée à amortir le déplacement de réglage avant l'impact sur la butée de fin de course.

2. Siège selon la revendication 1, **caractérisé en ce que** la matière thermoplastique est une matière plastique technique du groupe de matières premières polyacétal.

3. Siège selon la revendication 2, **caractérisé en ce que** la matière plastique est l'homopolymère acétal (POM-H).

4. Siège selon l'une des revendications 1 à 3, **caractérisé en ce que** l'élément d'amortissement (51, 52) présente une forme annulaire comprenant un évidement (55) central, comprenant une section (56) cylindrique et une section avant (57) de forme tronconique, dont la surface frontale (57a) forme la butée de fin de course.

5. Siège selon la revendication 4, **caractérisé en ce que** des lèvres d'amortissement (57b) faisant saillie du plan de la surface frontale sont formées sur l'évidement (55) dans la zone de la surface frontale.

6. Siège selon la revendication 4 ou 5, **caractérisé en ce que** des chambres d'amortissement ou des joints de dilatation compressibles sont conçu(e)s dans l'élément d'amortissement (51, 52).

7. Siège selon l'une des revendications 4 à 6, **caractérisé en ce qu'**il est prévu sur la transmission (14, 15, 42) une section (55) cylindrique permettant l'introduction de l'élément d'amortissement (51, 52).

8. Siège selon la revendication 7, **caractérisé en ce que** des nervures d'introduction (56a) sont formées dans la section (56) cylindrique de l'élément d'amortissement (51, 52).
